(19) **Europäisches Patentamt**
**European Patent Office**
**Office européen des brevets**

(11) Publication number: **0 301 138 B1**

(12) **EUROPEAN PATENT SPECIFICATION**

(45) Date of publication of patent specification: **29.05.91** (51) Int. Cl.⁵: **B60C 11/00, B60C 1/00**

(21) Application number: **87306612.0**

(22) Date of filing: **27.07.87**

(54) **A motorcycle tyre.**

(43) Date of publication of application:
**01.02.89 Bulletin 89/05**

(45) Publication of the grant of the patent:
**29.05.91 Bulletin 91/22**

(84) Designated Contracting States:
**DE FR IT**

(56) References cited:
**EP-A- 0 105 822**    **DE-A- 3 432 792**
**DE-A- 3 637 825**    **FR-A- 2 110 703**
**FR-A- 2 343 617**    **GB-A- 2 045 701**
**LU-A- 64 852**

**PATENT ABSTRACTS OF JAPAN, vol. 7, no. 291 (M-265)[1436], 27th December 1983; & JP-A-58 164 406 (SUMITOMO GOMU KOGYO K.K.) 29-09-1983**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Tomoda, Hiroshi**
**3-1-2144 Takahamacho**
**Ashiya-shi Hyogo-ken(JP)**
Inventor: **Osano, Kazuo**
**13 Go Hohen 12**
**Shirakawa-shi Tukishima-ken(JP)**

(74) Representative: **Stewart, Charles Geoffrey**
**SP TYRES UK LIMITED Tyre Technical Division**
**Fort Dunlop Birmingham B24 9QT(GB)**

## Description

The Present invention relates to a motorcycle tyre, especially a motocross tyre for use on a rough road. Because motocross tyres are driven on rough roads under severe conditions it is necessary to provide for such roads the good basic characteristics of grip, driving stability and so forth. In use stress is generated on the groove base of the tyre by shocks especially in traction or jumping and said stress may cause cracks or other damage to the tyre.

For a motorcycle tyre especially used for motocross, the tread pattern of the tyre is usually formed in a deep block pattern to provide the required grip. Therefore, a stress concentration is produced at the block base. To overcome the casing cracking etc it has been proposed to use natural rubber compound with high hardness and strong tear strength as the rubber compound for the tread, but this method resulted in sacrificing the important characteristics of the tread part such as grip, especially wet skid resistance and steering stability.

It is an object of the present invention to provide a motorcycle tyre in which, said problems are solved, that is, the tearing damage to the blocks of the tread is reduced without sacrificing the basic characteristics such as grip and steering property. A known tyre according to the preamble of claim 1 is shown, e.g., in FR-A-2110703.

The present invention provides a motorcycle tyre having a tread portion which is provided with a block pattern and is composed of two layers in the tread construction, an inner tread part in the radially inner region and an outer tread part in the radially outer region of the tread, and the base of the tread grooves being radially inwards of the radially outermost parts of the boundary line between the inner part and the outer part, whereby the inner tread part is composed of a rubber compound containing at least 40 parts in weight of a synthetic polyisoprene rubber or natural rubber and has a complex modulus of dynamic elasticity (E*) in a range of 100 to 300 kgf/cm$^2$ and a tear strength of greater than 55 kg/cm at 25°C, and the outer tread part being composed of a rubber compound containing more than 50 parts by weight of Styrene - Butadiene copolymer.

Two embodiments of the invention will now be described in conjunction with the drawings:-

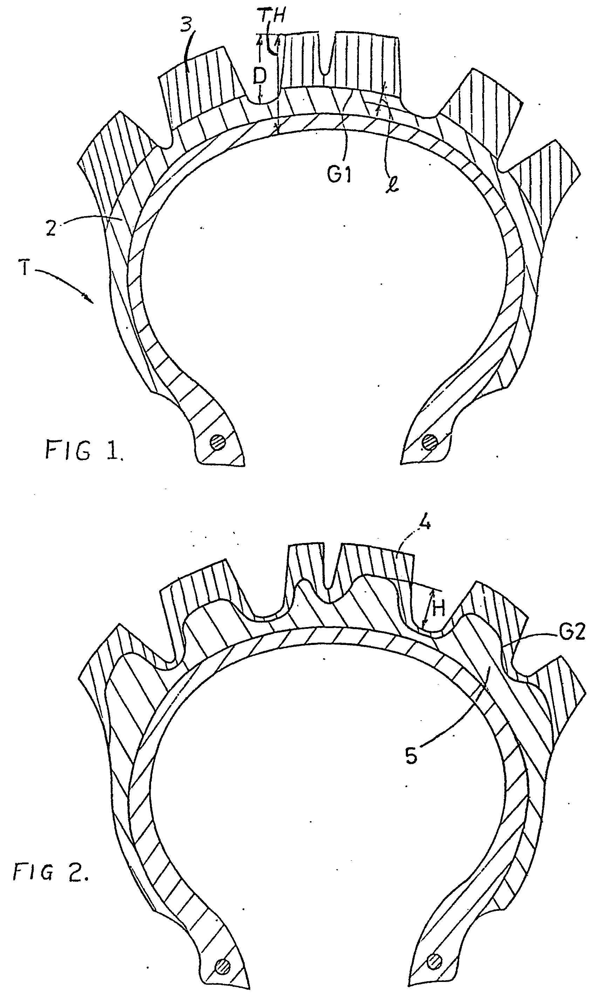

Fig.1. is a sectional view of a tyre embodying the invention

Fig.2. is a sectional view of a second embodiment. The tread surface 1 of the tyre T in Fig.1. is formed as a block pattern in which, a plurality of separate blocks is arranged. Each block is surrounded by comparatively deep grooves and the ratio of the depth D of the groove to the total tyre section thickness TH at the tyre centre lies in the range of 55 to 80%. The tread 1 consists of two layers an inner tread part 2 and an outer tread part 3. The border line G1 between the tread parts 1&2 is situated radially outwards of the groove base, and the distance between the border line and the groove base is preferably in the range of 2 to 5mm.

As the stress concentration in use of the tyre occurs at the block base, material is used which has an inner tread part material which has a high tear resistance. The rubber compound used for the inner tread part 2 contains at least 40% by weight of synthetic polyisoprene rubber or natural rubber and having a bielemental elasticity coefficient (i.e. complex modulus) (E*) in the range of 100 kg/cm$^2$ to 300 kg/cm$^2$. Said bielemental elasticity coefficient (E*) is the value measured by the viscoelasticity spectrometer of Iwamoto Seisakujo carried out at a temperature of 70°C, a frequency at 10Hz and a Kinetic strain of 2%.

Owing to the use of rubber having such properties for the inner tread part 2, the problem of tear and break off of the block is suppressed even with the high stress concentrations from repeated deformations in use. Furthermore, as the main ingredient is natural rubber or synthesised polyisoprene rubber, the temperature rise is less than in the case of conventional SBR rubber compound, therefore the said problems of tear and break off of the block are even more suppressed. In the case where the bielemental elasticity coeficient (E*) is less than 100 kg/cm$^2$ the deformation in use becomes greater and the effect becomes smaller, and also the steering stability is decreased. While, in the case where (E*) exceeds 300 kg/cm$^2$ the rigidity of the tread part 1 becomes too high and the riding comfort is reduced. By making the tear strength of the rubber for the inner tread part 2 more than 55 kg/cm , said occurrence of tear may be still further reduced.

Then again the rubber for the outer tread part 3 is a rubber having 50% less weight of styrene-butadiene copolymer. This is because it is important for the tread surface of the tread part 1 to maintain the grip property especially on wet roads.

Another rubber usable for the outer tread part 3 along with the said copolymer is diene rubber in which a 25 - 95% vinyl bond is combined with in its butadiene part.

In Table 2, there is shown the composition of the outer tread rubber.

Fig. 2 shows another embodiment of the invention in which, the border line G2 between the outer tread part 4 and the inner tread part 5 is formed in a wavy line. In this case, as the inner tread part 5 having high bielemental elasticity coefficient (i.e. complex modulus) (E*) tresspasses deeply into the inside of the tread blocks the strength of each block improved and shows excellent resistance to the damage of crack. The distance H from the groove base to the outermost portions of the said border line G2 is preferably 2 to 6 mm.

The present invention is applicable to each construction of hitherto widely used bias tyre o radial tyre.

Table 1 shows some usable inner tread compound formulations.

Test tyres were made size 120.100-18 and each having the structure shown in Fig.1 and complying with the specification in Table 3. Various characteristics of the tyre such as the tear damage of the block on the tread part, steering stability and wet grip were observed and evaluated on a 250cc. Motocross machine with the rear wheel carrying the test tyre.

As mentioned above, the present invention, in the tyre provided with a block pattern on its tread part, and a tread part consisting of two layers one inner tread part being rubber compound having high bielemental elasticity coefficient and the other outer tread part being rubber compound having a high tangent loss factor, provides a tyre having improved the tearing damage resistance of the blocks, especially in the block tearing off problem together with wet grip performance and high stability due to the high resistance to deformation strain working on the unit blocks during rotation.

From Table 3, examples according to the present invention can be seen to have improved wet skid resistance and steering stability together with widely reduced block tearing-off.

Table 1

| Compound No. for the inner tread part | A | B | C | D | E | F | G | H | J | K | L |
|---|---|---|---|---|---|---|---|---|---|---|---|
| Natural rubber RSS No. 3 | — | 20 | 40 | 50 | 60 | 70 | 80 | 90 | 100 | 70 | 70 |
| SBR 1712 | 100 | 80 | 60 | 50 | 40 | 30 | 20 | 10 | 0 | 30 | 30 |
| Sulphur | 1.8 | 1.8 | 1.8 | 1.8 | 1.8 | 1.8 | 1.8 | 1.8 | 1.8 | 1.8 | 1.8 |
| ISAF N220 | 80.0 | 80.0 | 80.0 | 80.0 | 80.0 | 80.0 | 80.0 | 80.0 | 80.0 | 65.0 | 50.0 |
| Aromatic oil | 8.0 | 8.0 | 8.0 | 8.0 | 8.0 | 8.0 | 8.0 | 8.0 | 8.0 | 8.0 | 20 |
| Wax | 2.0 | 2.0 | 2.0 | 2.0 | 2.0 | 2.0 | 2.0 | 2.0 | 2.0 | 2.0 | 2.0 |
| Stearic acid | 3.0 | 3.0 | 3.0 | 3.0 | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 | 3.0 | 3.0 | 3.0 | 3.0 |
| ROBO13 | 2.0 | 2.0 | 2.0 | 2.0 | 2.0 | 2.0 | 2.0 | 2.0 | 2.0 | 2.0 | 2.0 |
| MOR | 1.2 | 1.2 | 1.2 | 1.2 | 1.2 | 1.2 | 1.2 | 1.2 | 1.2 | 1.2 | 1.2 |
| Laboratory test data | | | | | | | | | | | |
| Tear strength kg/cm | 41 | 43 | 55 | 59 | 65 | 70 | 73 | 73 | 75 | 63 | 60 |
| Bielemented elasticity coefficient (E*) *1 kgf/cm$^2$ | 150 | 150 | 150 | 150 | 150 | 150 | 150 | 150 | 150 | 100 | 80 |

Table 2

| Compound No. for the outer tread part | M | N | P | Q | R | X |
|---|---|---|---|---|---|---|
| Natural rubber | 0 | 20.00 | 40.00 | 50.00 | 70.00 | 100.00 |
| SBR1500 | 100.00 | 80.00 | 60.00 | 50.00 | 30.00 | 0 |
| ISAP N220 | 80.00 | 80.00 | 80.00 | 80.00 | 80.00 | 80.00 |
| Aromatic oil | 15.00 | 15.00 | 15.00 | 15.00 | 15.00 | 15.00 |
| Wax | 2.00 | 2.00 | 2.00 | 2.00 | 2.00 | 2.00 |
| ROBO13 | 2.70 | 2.70 | 2.70 | 2.70 | 2.70 | 2.70 |
| Stearic acid | 1.00 | 1.00 | 1.00 | 1.00 | 1.00 | 1.00 |
| Zinc oxide | 3.00 | 3.00 | 3.00 | 3.00 | 3.00 | 3.00 |
| Sulphur | 1.50 | 1.50 | 1.50 | 1.50 | 1.50 | 1.50 |
| CZ | 1.50 | 1.50 | 1.50 | 1.50 | 1.50 | 1.50 |
| Loss tangent tan δ | 0.380 | 0.360 | 0.345 | 0.336 | 0.3 | 0.280 |

*1: Bielemented elastic coefficient (E*) and Loss tangent (tan δ) were measured by means of a viscoelastic spectrometer made Iwamoto Seisakusho Co., Ltd., at a frequency of 10HZ under a condition that a dynamic strain is 2% under static elongation strain of 10% at 70°C. In this case, a strip-like sample having a length between chucks of 3 cm, a width of 4 mm and a thickness of 1.5 mm was prepared from the rubber composition.

EP 0 301 138 B1

Table 3

| | Examples | | | | | Comparative examples | | |
|---|---|---|---|---|---|---|---|---|
| | 1 | 2 | 3 | 4 | 5 | 1' | 2' | 3' |
| Outer tread compound No. | M | M | M | P | P | X | N | M |
| Inner tread compound No. | J | G | F | E | D | A | C | I |
| Block tearing off   Note 1) | 6 | 8 | 8 | 10 | 15 | 68 | 25 | 36 |
| Stearing stability   Note 2) | 3.5 | 3 | 3 | 3 | 3 | 3 | 3 | L |
| Brakability on wet road Note 3) | 140 | 140 | 140 | 123 | 123 | 100 | 128 | 140 |

Note 1 ... shows the number of blocks teared off after running for 4 hours on hard road.

Note 2 ... evaluted the feeling during actual running by 5 points value, the larger the value, the better the feeding.

Note 3 ... a vehicle provided with the test type was run on wet asphalt road at a speed of 70 km/h and thereafter subjected to rapid braking at the above speed. Then, a running distance required for completely stopping the vehicle was defined by an index on the basis that the type of comparative Example 1' is 100, the larger the index value, the better the wet skid resistance.

Claims

1. A motorcycle tyre having a tread portion (1) comprises a block pattern composed of two rubber compound layers, an inner tread part (2,5) in the radially inner region and an outer tread part (3,4) in the radially outer region of the tread, and the base of the tread grooves being radially inwards of the radially outermost parts of the boundary line (G1,G2) being between the inner part (2,5) and the outer part (3,4), characterised in that the inner region (2,5) is composed of rubber compound containing at least 40 parts by weight of a synthetic polyisoprene rubber or natural rubber and having the complex modulus of dynamic elasticity (E*) (i.e., the value measured by the viscoelasticity spectrometer of Iwamoto Seisakujo carried out at a temperature of 70°C, a frequency of 10 Hz and a kinetic strain of 2%) in the range from 100 to 300 kgf/cm² and a tear strength of greater than 55 kg/cm at 25°C, and the outer part (3,4) is composed of a rubber compound containing more than 50 parts by weight of Styrene-Butadiene copolymer.

2. A motorcycle tyre according to claim 1 characterised by the boundary G2 in the tread blocks being radially outside the base of the grooves but in the groove regions themselves the boundary line is radially inwards of the base of the grooves.

3. A motorcycle tyre according to claim 1 characterised by the boundary being radially outside the base of the grooves in all regions and the groove bases are formed by the radially inner tread compound.

## Revendications

1. Pneumatique de motocyclette ayant une partie (1) de bande de roulement qui a une sculpture sous forme de blocs, composée de deux couches de compositions de caoutchouc, une partie interne (2, 5) étant placée dans la région radialement interne de la bande de roulement et une partie externe (3, 4) étant placée dans la région radialement externe de la bande de roulement, la base des gorges de la bande de roulement étant disposée radialement vers l'intérieur par rapport aux parties radialement les plus externes de la limite (G1, G2) entre la partie interne (2, 5) et la partie externe (3, 4) de bande de roulement, caractérisé en ce que la région interne (2,5) est composée d'une composition de caoutchouc contenant au moins 40 parties en poids d'un caoutchouc de polyisoprène de synthèse ou de caoutchouc naturel et ayant un module complexe d'élasticité dynamique (E*) (c'est-à-dire la valeur mesurée par le spectromètre viscoélastique de Iwamoto Seisakusho, à une température de 70°C, une fréquence de 10 Hz et une déformation cinétique de 2 %) compris entre 100 et 300 kgf/cm² et une résistance à la déchirure supérieure à 55 kg/cm à 25°C, et la partie externe (3, 4) est composée d'une composition de caoutchouc contenant plus de 50 parties en poids d'un copolymère de butadiène-styrène.

2. Pneumatique de motocyclette selon la revendication 1, caractérisé en ce que la limite (G2) formée à l'intérieur des blocs de la bande de roulement est disposée radialement à l'extérieur par rapport à la base des gorges mais, dans les régions des gorges elles-mêmes, cette limite est placée radialement vers l'intérieur par rapport à la base des gorges.

3. Pneumatique de motocyclette selon la revendication 1, caractérisé en ce que la limite est disposée radialement à l'extérieur par rapport à la base des gorges dans toutes les régions, et les bases des gorges sont formées par la composition radialement interne de la bande de roulement.

## Ansprüche

1. Motorradreifen mit einem Laufstreifenabschnitt (1), der umfaßt: ein aus zwei Gummimassenschichten zusammengesetztes Blockmuster, einen inneren Laufstreifenteil (2,5) im radial inneren Bereich und einen äußeren Laufstreifenteil (3,4) in dem radial äußeren Bereich des Laufstreifens, und die Basis der Laufstreifennuten radial innerhalb der radial äußersten Teile der Grenzlinie (G1,G2) zwischen dem inneren Teil (2,5) und dem äußeren Teil (3, 4) ist, dadurch gekennzeichnet, daß der inere Bereich (2, 5) aus Gummimasse zusammengesetzt ist, die mindestens 40 Gewichtsteile eines synthetischen Polyisoprengummis oder Naturgummi enthält mit einem komplexen dynamischen Elastizitätsmodul (E*), (d.i. dem durch das Viskoelastizitäts-Spektrometer von Iwamoto Seisakujo bei einer Temperatur von 70°C, einer Frequenz von 10 Hz und einer kinetischen Zugspannung von 2% gemessenen Wert) im Bereich von 100 bis 300 kp/cm² und eine Zugfestigkeit von mehr als 55 kp/cm bei 25°C aufweist und der äußere Teil (3, 4) aus einer Gummimasse zusammengesetzt ist, die mehr als 50 Gewichtsteile Styrol-Butadien-Copolymer enthält.

2. Motorradreifen nach Anspruch 1, dadurch gekennzeichnet, daß die Grenze (G2) sich in den Laufstreifenblöcken radial außerhalb der Basis der Nuten, jedoch in den Nutbereichen selbst radial innerhalb der Basis der Nuten befindet.

3. Motorradreifen nach Anspruch 1, dadurch gekennzeichnet, daß die Grenze in allen Bereichen radial außerhalb der Basis der Nuten ist und daß die Nutbasen durch die radial innere Laufstreifenmasse gebildet sind.

FIG 1.

FIG 2.